# EUROPEAN PATENT SPECIFICATION

(11) **EP 2 091 785 B1**
(45) Date of publication and mention of the grant of the patent: **07.08.2013**
(21) Application number: 07856382.2
(22) Date of filing: 05.12.2007
(51) Int. Cl.: B60R 13/04

(54) **PROTECTIVE PAD**
SCHUTZPOLSTER
COUSSIN DE PROTECTION

(30) Priority: 08.12.2006 EP 06025427
(43) Date of publication of application: 26.08.2009
(73) Proprietor: NMC S.A., 4731 Eynatten (BE)
(72) Inventor: DUJARDIN, René, 4730 Raeren (BE); MAYERES, Jean-Pierre, 4700 Eupen (BE)
(74) Representative: Jostarndt, Hans-Dieter
(86) International application number: PCT/EP2007/010554
(87) International publication number: WO 2008/068002

(56) References cited:
- EP-A2- 0 095 236
- GB-A- 1 428 811
- GB-A- 1 561 525
- GB-A- 2 242 222
- US-A- 4 277 526
- US-A- 4 296 155
- US-A- 4 546 021

## Description

The invention concerns a protective pad, which may be used to protect a surface, including an optionally protruding element of this surface, as well as an edge of the surface bordering the protective pad. The protective pad according to the present invention may therefore be particularly useful to protect the door of a vehicle comprising a side bar as well as the edge of the vehicle's door.

Different edge protectors or edge guards are known in the art, for example from DE 2257257A, DE 8901452U, DE 9003023U, DE 9411709U, DE 4030359A, DE 19935084A, US 4334700A and US 4753040A.

However, this kind of edge protectors or edge guards suffer certain important drawbacks as they all have to be placed on the edge, which has to be protected, to be effective.

Furthermore, one has to ensure that the whole edge protector or edge guard is strongly clamped on the edge to be protected, because if it not entirely clamped on the edge the edge protector or edge guard may be removed, by jumping of the edge, upon collision with an obstacle.

In addition, this kind of edge protectors or edge guards may not be adequately placed on a portion of a door comprising a protruding side bar, because the protruding side bar hinders to strongly clamp the edge of the door. The protruding side bar hinders to strongly clamp the edge of the door simply because the protruding side bar opens the edge protector or edge guard because she forms a bump, so that the edge of the door may not strongly be clamped in the vicinity of the protruding side bar. The edge protector or edge guard may therefore be removed, by jumping of the edge, upon collision with an obstacle. Of course, it may be possible to place the edge protector or edge guard on a part of the edge located above or under the protruding side bar, but doing so does not allow to protect the side bar from damages.

To overcome this drawback a special design for an edge protector, which may protect both the edge of the door and a protruding side bar is described in the DE20005921U This kind of edge protector has however also to be placed on the edge, which has to be protected, to be effective

Using such an edge protector or edge guard means thus that if the edge of the door of vehicle has to be protected, this door has to be opened first to allow the placing of the edge protectors or edge guards. Doing so costs time and may even result in damaging the edge, as it is not protected during this first opening of the door.

Moreover, these edge protectors or edge guards have all to be placed and removed very carefully because they have to strongly clamp the edge, so that removing them quickly may also result in damaging the edge and/or a part of the door, especially the door painting, by scratching it for example.

These drawbacks are inherent to the design and the operating mode of these edge protectors or edge guards.

Beside of that, an edge protectors or edge guard, which may protect edges without being clamped on them, is known from the patent EP 1343659.

The edge guard with a crescent shape described in the patent EP 1343659 may be placed on a protruding side bar of a vehicle's door by fixing two adhesive portions of the edge guard above and under the protruding side bar on the surface of the door. However, to allow an effective protection of both the edge of the door and the protruding side bar, one has to place the edge guard very carefully to ensure that both adhesive portions of the edge guard are firmly fixed to the door. When one of the adhesive portions of the edge guard is not firmly fixed on the vehicles door, the edge guard may not protect both the edge and the side bar efficiently because it may be lifted and or swing to one or the another side so that the edge and/or the side bar to be protected remains unprotected. Moreover, an adhesive portion which is not firmly fixed on the vehicles door may catch up dust and particularly dust particles, so that the adhesive portion comprising dust or dust particles may scratch or otherwise damage the door and/or it's painting and/or coating for example by rubbing against it. This may be an important drawback if a quick and easy placement is required, for example because a high placement throughput is desired.

Therefore, it is an object of the present invention to provide a protective pad to protect a surface, including an optionally protruding element, as well as an edge of the surface bordering the protective pad, while also allowing a very quick and very easy placement of a protective pad.

This may be possible using the protective pad according to claim 1.

Other advantageous embodiments of the present invention are described by the dependent claims 2 to 13.

The protective pad according to the present invention comprises one adhesive portion and extends beyond this portion at least in two directions, which are parallel to the adhesive portion. This allows to fix the protective pad to a surface in the vicinity of an edge and/or a protruding element quickly and easily using the adhesive portion, while the protective pad extends beyond the adhesive portion in at least two directions, so that it extends over the edge and/or over the optionally protruding element to protect one or both of them. An optionally protruding element may for example be an edge or a side bar, which may optionally be protruding from the surface of a vehicle's door and/or body forming some kind of bump. However, the side bar may also not be protruding, so that it may be integrated into the surface of the door for design purposes, although in this case the side bar may less efficiently prevent damages from the door. Moreover, the optionally protruding element may also be any kind of optionally protruding fold of the vehicle's body running at least on a part of the side of a vehicle. As these elements may protrude from the surface of the door and/or of the body of a vehicle, they may require protection, because they are in first line to be damaged, for example by a bump or a collision with an obstacle.

The protective pad according to the present invention may therefore preferably for example be used to protect at least one edge, at least a part of a surface bordering this edge and at least one optionally protruding element.

One adhesive portion in the sense of the present invention means one portion of the protective pad, which may adhere to a surface to achieve the fixing of the protective pad, preferably in one step and/or using one movement, so that it may be possible to fix the protective pad to the surface bordering the edge and/or the optionally protruding element preferably in one step and/or using one movement. This may be done for example by providing one adhesive portion, which may be fixed in the vicinity of both the edge and the optionally protruding element to be protected, preferably so that the adhesive portion may border both the edge and the optionally protruding element to be protected. Moreover, the protective pad according to the present invention may be preferably designed, so that by holding it and applying it on a surface, pressure is applied on the whole adhesive portion or at least on all adhesive zones of the adhesive portion to fix the protective pad to the surface bordering the edge and/or the optionally protruding element preferably in one step and/or using one movement.

Because one adhesive portion is provided, so that it may be possible to fix the protective pad to the surface bordering the edge and/or the optionally protruding element preferably in one step and/or using one movement, the protective pad may be quickly and easily placed and firmly fixed to the surface in the vicinity of the edge and/or of the optionally protruding element, which may for example be another edge or an optionally protruding side bar, to be protected, so that they that may be efficiently protected. The protective pad may not be lifted or swing to one or to another side leaving an edge to be protected and/or an optionally protecting element without protection. As stated previously this allows a very quick and easy placement, so that the protective pads may be placed with a high throughput.

One has of course not to take care that several adhesive portions are firmly fixed to the surface in the vicinity of the edge, because one adhesive portion achieving a firm fixing of the protective pad in one step and/or using one movement may be provided.

In the present invention, the adhesive portion a continuous portion of the protective pad. A continuous portion in the sense of the present invention may mean that the adhesive portion may not comprise at least two adhesive parts separated one from another by the edge and or optionally protruding element when the protective pad is used. This may also help to fix the protective pad to the surface bordering the edge and/or the optionally protruding element easily preferably in one step and/or using one.

Because the protective pad comprises one continuous adhesive portion it may preferably not comprise two adhesive parts, including two distinct adhesive portions, separated one from another by the edge and/or an optionally protruding element when the protective pad is used, as this may also help to fix the protective pad to the surface bordering the edge and/or the optionally protruding element easily preferably in one step and/or using one movement.

In the present invention exactly one adhesive portion is provided. This further helps to fix the protective pad to the surface bordering the edge and/or the optionally protruding element easily preferably in one step and/or using one movement.

The adhesive portion may thereby adhere to the surface bordering an edge and/or an optionally protruding element because of any kind of adhesive means, which may adhere to a surface to achieve the fixing of the protective pad, including magnets and/adhesives. However, these means may preferably allow to remove the protective pad from the surface without damaging the surface and/or it's painting and/or coating, preferably without leaving any traces and/or residues on the surface.

The adhesive means of the adhesive portion may for example be simply and very conveniently provided by using a double face adhesive tape with the required characteristics applied on a portion of the protective pad, which has to become the adhesive portion. The double face adhesive tape may for example preferably comprise at least one strongly and/or permanently adhesive on one face, which may be applied to the portion of the protective pad, which has to become the adhesive portion, to provide a strong fixing of the adhesive tape to the protective pad and at least one other less strong and/or removable adhesive on the other face, which may preferably be protected before the first use of the protective pad for example with a so called release paper, so that the protective pad may be removed from a surface and/or repositioned, preferably without leaving any traces and/or residues.

In other embodiments of the present invention the adhesive means of the adhesive portion of the protective pad may be provided using an adhesive tape bearing at least one removable adhesive on one side, so that the protective pad may be removed and/or repositioned preferably without, leaving any traces and/or residues, from a surface on one side and at least one permanent and/or strong adhesive, like for example a hot melt adhesive, a pressure sensitive adhesive, a two component adhesive, a heat or UV- curable adhesive or the like, on the other side of the adhesive tape or on the portion of the protective pad which has to become the adhesive portion before laminating said adhesive tape and the protective pad, preferably the portion of the protective pad, which has to become the adhesive portion, together.

In another preferred embodiment of the present invention the adhesive portion of the protective pad may comprise at least one permanent and/or strong adhesive, like for example a hot melt adhesive, a pressure sensitive adhesive, a two component adhesive, a heat or UV- curable adhesive or the like, so that the protective pad may be strongly applied and/or fixed to a protective layer, preferably a protective sheet, for example of at least one preferably polymeric material, applied and/or fixed on the surface bordering an edge and/or an optionally protruding element. This may be useful when a protective sheet, for example preferably of at least one polymeric material, is applied and/or fixed to a vehicles door to protect this door and/or it's painting and/or coating, for example from scratches. The protective pad is then removed together with the protective sheet in this case.

In some embodiments of the present invention, the adhesive portion may be an uninterrupted portion of the conductive pad. An uninterrupted portion of the protective pad in the sense of the present invention means that this portion of the protective pad may not comprise a portion of the protective pad, which, when the protective pad is placed on a surface bordering the edge and/or the optionally protruding element to be protected, is not in contact with the surface bordering the edge and/or the optionally protruding element to be protected. This may even further help to fix the protective pad to the surface bordering the edge and/or the optionally protruding element easily preferably in one step and/or using one movement.

However, the adhesive portion may comprise at least two different adhesive zones, comprising adhesive means, as well as at least one non-adhesive zone, which may not comprise adhesive means. In some embodiments of the present invention, at least two different adhesive zones as well as at least one non-adhesive zone may be comprised by a preferably uninterrupted portion of the protective pad, which is in contact with the surface bordering the edge and/or the optionally protruding element. A foam comprising an example of such an adhesive portion comprising at least two different adhesive zones as well as at least one non-adhesive zone as well as the advantage resulting from the use of this kind of adhesive portion is for example described in the european patent application EP 1389629.

To determine whether a protective pad extends beyond the adhesive portion in one direction, the adhesive portion may be considered as determined by the plane geometrical form with the lowest area comprising all adhesive zones or their projections in a plane tangent to the adhesive portion when this portion is curved.

Extending beyond the adhesive portion in one direction in the sense of the present invention may mean extending beyond the adhesive portion directly from the adhesive portion in one direction, so that a protective pad which extends beyond the adhesive portion directly from the adhesive portion in one direction before changing the direction in which it extends in any way, for example gradually, step-wise or abruptly, or a protective pad which extends beyond the adhesive portion directly from the adhesive portion in one direction while changing it's direction may be considered as extending beyond the adhesive portion in only one direction.

Moreover, one direction in the sense of the present invention may not only be upward, downward, to the right or to the left, but also any direction characterised by one angle comprised between 1° and 89° between these four directions, so that the protective pad may extend beyond the adhesive portion for example in only one direction characterised for example by an angle of 45° between the directions to the right and downward, when the protective pad extends beyond the adhesive portion not straight down but down to the right.

In other embodiments of the present invention, the protective pad may extend beyond it's adhesive portion at least in three directions, which are parallel to the adhesive portion. This may allow either to protect an edge as well as two optionally protruding elements or to use the protective pad easily on the doors located on both sides of a vehicle, to protect an edge and an optionally side bar. Actually an protective pad, which extends beyond it's adhesive portion in only two directions, which are parallel to the adhesive portion, may only be used to protect both an edge and an optionally protruding side bar on one side of a vehicle because a symmetrical protective pad may be required to protect an edge and an optionally protruding element of the door located on the other side of the vehicle. However, when the protective pad extends beyond its adhesive portion in at least three directions, which are parallel to the adhesive portion, it may be used to protect the edges and side bars on doors located on both sides of the vehicle. This further facilitates the placement of the protective pad, as one has not to select the right pad for the right vehicle side.

This means that the maximal length and/or the maximal width of the protective pad may be superior to the maximal length and/or the maximal width of the adhesive portion of the protective pad.

The maximal length of the protective pad or of the adhesive portion of the protective pad in the sense of the present invention may be the greatest measurable distance between two points of the same face of the protective pad or of the same face of the adhesive portion of the protective pad parallel to a side or to a tangent to a side of the protective pad or of the adhesive portion of the protective pad. The maximal width of the protective of the adhesive portion of the protective pad may be the greatest measurable distance in a direction perpendicular to the line passing through the two points defining the maximal length of the protective pad.

The difference between the maximal length and/or the maximal width of the protective pad and the maximal length and/or the maximal width of the adhesive portion of the protective pad may therefore for example be between 100 mm and 2 mm, preferably between 75 mm and 2 mm, further preferred between 50 mm and 2 mm, further preferred between 40 mm and 2 mm, further preferred between 35 mm and 2 mm, further preferred between 20 mm and 2 mm, even more preferred between 10 mm and 2 mm.

Increasing the difference between the maximal length and/or the maximal width of the protective pad and the maximal length and/or the maximal width of the adhesive portion of the protective pad may increase the efficiency of the protection, while on the other hand also increasing the production costs, as more material is needed.

In some embodiments of the present invention, the width of the protective pad may vary along a direction, which may be perpendicular to the adhesive portion of the protective pad. This means that the width of the protective pad may vary progressively and/or step-wise in one or more then one step along a direction, which is perpendicular to the adhesive portion of the protective pad. This allows a great liberty to create different designs for the protective pad to reach an optimum protection, by increasing the width locally if required to get a better protection.

In some other embodiments of the present invention, the width of the protective pad may vary along a direction, which may be parallel to the adhesive portion of the protective pad. This means that the width of the protective pad may vary progressively and/or step-wise in one or more then one step along a direction, which is parallel to the adhesive portion of the protective pad. This allows a great liberty to create different designs for the protective pad to reach an optimum protection, by increasing the width locally if required to get a better protection.

However, protective pads according to the present invention may be obtained for example either by any kind of molding or by extrusion or even by fixing to rectangular parts together by any means, for example by gluing them together.

In the present invention, at least two directions parallel to the adhesive portion, in which the protective pad extends beyond the adhesive portion, may not be opposed one to another.

Not opposed one to another in the sense of the present invention means that they may form an angle of between 1° and 179° and/or 181° and 359°. This may allow to protect edges and/or at least one optionally protruding element oriented in a non-parallel way one to another.

In preferred embodiments of the present invention, at least two directions parallel to the adhesive portion, in which the protective pad extends beyond the adhesive portion, may be perpendicular one to another. This may useful when the edge of a vehicle's door and the corresponding optionally protruding side bar placed on this door have both to be protected using the protecting pad according to the invention, as they may preferably be disposed in a perpendicular way.

In preferred embodiments of the present invention, the width of the protective pad may increase progressively and or step-wise with an increasing distance along a direction, which is perpendicular to the adhesive portion of the protective pad.

Moreover, the thickness may vary along a direction, which is parallel to the adhesive portion of the protective pad. This means that the thickness of the protective pad may vary progressively and/or step-wise in one or more then one step along a direction, which is parallel to the adhesive portion of the protective pad.

The thickness of the protective pad in the sense of the present invention may be the greatest measurable distance between two points of the protective pad in a direction perpendicular to the adhesive portion.

A varying thickness of the protective pad along a direction, which is parallel to the adhesive portion, allows to get an increased flexibility of the protective pad when the thickness is lowered and/or a better protection even against very strong bumps when the thickness is increased. This offers the possibility to increase locally the flexibility, so that the protective pad may be easily applied and/or adapted to a curved surface, by at least partially bending it. Furthermore, it permits to get an increased protection of sensitive parts and/or in zones, which are particularly exposed, to damage, simply by locally increasing the thickness.

In addition, varying the thickness of the protective pad along a direction, which is parallel to the adhesive portion of the protective pad, may allow the protective pad to be slanted widthwise at least at one end. This may be a very simple and convenient way of varying the thickness of the protective pad to increase flexibility, at the thinner end of the slanted protective pad, and/or to provide a better protection at the thicker end of the slanted protective pad.

In preferred embodiments of the present invention, the protective pad may be slanted widthwise at least at one end, so that the thickness decreases along the slant of the protective pad starting from the adhesive portion. Doing so may allow to get a slant, which extends even beyond the end of the adhesive portion of the protective pad, while having a flexibility increasing with a decreasing thickness. This may help the protective pad to protect an edge and/or an optionally protruding element as the slant, which extends beyond the end of the adhesive portion of the protective pad, may cover this edge and/or this optionally protruding element, so that the underlying edge and/or optionally protruding element is protected from damage.

Beside of this the increased flexibility with a decreasing thickness along the slant may allow the slant of the protective pad to better wrap flexibly over and around an edge and/or an optionally protruding element to achieve an optimum protection.

In other embodiments of the present invention, the protective pad may be slanted widthwise at one end, so that the thickness decreases along the slant of the protective pad starting from the adhesive portion and slanted widthwise at the other end, so that the thickness increases along the slant of the protective pad starting from the adhesive portion. Beside allowing to protect an edge and/or an optionally protruding element underlying the slant extending beyond the end of the adhesive portion of the protective pad at one end of the protective pad, this may allow to get an increased flexibility with a decreasing thickness of the adhesive portion at the other end of the protective pad, so that the adhesive portion may be easily adapted flexibly to any kind of surface, especially to curved surfaces, bordering the edge and/or the optionally protruding element to be protected to provide an optimum fixing.

In other preferred embodiments of the present invention, the angle of the slate is selected, so that depending of the thickness an edge and/or an optionally protruding element may be covered by the protective pad to prevent any damage by placing the protective pad next to an edge and/or an optionally protruding element, like for example a side bar.

In some embodiments of the present invention, the adhesive portion may be plane and/or curved, whereby plane and curved may mean at least partially plane and at least partially curved. Depending on the surface and particularly on the curvature of the surface bordering an edge and/or at least another optionally protruding element to be protected either a plane and/or curved adhesive portion of the protective pad may provide a better fixing of the protective pad.

However, when the adhesive portion is curved and/or at least partially curved, parallel to the adhesive portion of the protective pad and perpendicular to the adhesive portion of the protective pad may also mean respectively parallel to an tangent to the adhesive portion or perpendicular to the a tangent to the adhesive portion. So that either parallel to the adhesive portion and/or parallel to an tangent to the adhesive portion of the protective pad or perpendicular to the adhesive portion and/or perpendicular to the a tangent to the adhesive portion of the protective pad may be meant respectively by parallel to the adhesive portion of the protective pad or perpendicular to the adhesive portion of the protective pad.

In some embodiments of the present invention, the protective pad may comprise a cross section with a T-like or Y-like form. The non-vertical parts of the T-like or Y-like form of the cross section may form any angle between 1° and 179°, preferably between 10° and 170° with the vertical part of the T-like or Y-like form, which may correspond to the base of the T or Y. Such cross sections may allow to have a protective pad, which extends beyond an adhesive portion, which may preferably located at the base of the T-like or Y-like form, in at least two directions, which are parallel to the adhesive portion and preferably to the base of the T-like or Y-like form, while at least one part of the protective pad may very easily bend and/or wrap around and/or over the edge and/or the optionally protective element to be protected.

Protective pads, which may comprise a cross section with a T-like or Y-like form, are particularly easy to obtain either by any kind of molding or by extruding a material through a T-like or Y-like shaped extrusion nozzle or even by fixing to rectangular parts together by any means, for example by gluing them together.

However, continuous production processes may preferably be used as they allow the reach high production throughputs.

Moreover, cross sections of the protective pad in which a T-like or Y-like form may be inscribed may be preferred as they may even more easily be obtained by extruding a material through a T-like or Y-like shaped extrusion nozzle, even when this material undergoes some swelling while and/or after extrusion, so that beside allowing to get a protective pad, which extends beyond an adhesive portion, which may preferably located at the base of the T-like or Y-like form, in at least two directions, which are parallel to the adhesive portion and preferably to the base of the T-like or Y-like form, while at least one part of the protective pad may very easily bends and/or wraps around and/or over the edge and/or the optionally protective element to be protected, it also allows to use a continuous extrusion process for the production of the protective pad, when materials, which undergo some swelling while and/or after extrusion are used. The non-vertical parts of the T-like or Y-like form which may be inscribed in the cross section of the protective pad may form any angle between 1° and 179°, preferably between 10° and 170° with the vertical part of the T-like or Y-like form, which may correspond to the base of the T or Y. Cross sections of the protective pad, in which a T-like or Y-like form may be inscribed, may preferably include cross sections with a mushroom-like form and/or with form like the cross section of a mushroom.

In even further preferred embodiments of the present invention, the cross section of the protective pad may be at least partially circular, with a straight portion, resulting from cutting of a part of the circle with a straight cut, preferably beneath the diameter. Beside of allowing to get a protective pad, which extends beyond an adhesive portion, which may preferably located on the straight segment, in at least two directions, which are parallel to the adhesive portion and thus preferably also to the straight portion, it also allows to use even more easily a continuous extrusion process for the production of the protective pad, when materials, which undergo some swelling while and/or after extrusion are used as this form is very easily obtained using the corresponding extrusion nozzle.

In even further preferred embodiments of the present invention, the cross section of the protective pad may be at least partially in the form of a compressed circle, with a straight portion, resulting from cutting of a part of the circle with a straight cut, preferably beneath the diameter and compressing the resulting partially circular form against the resulting straight portion by reducing the height of the cross section, while preferably keeping the area of the cross section constant, so that the form of the cross section may extend beyond the diameter of the circle at both side of the form. Doing so may allow to increase width of the protective pad above the diameter of the circle, thus increasing the portions of the protective pad, which extend beyond the adhesive surface and subsequently also the efficiency of the protective, which may be provided. This kind of cross section may preferably also include at least partially ellipsoidal cross sections.

In other embodiments of the present invention, the protective pad may comprise at least one incision, which may be made widthwise. This incision may allow to further increase the flexibility of the protective pad and especially of the adhesive portion of the protective pad, so that it can be applied on and/or adapted to any kind of surface, especially any kind of curved surface, bordering an edge and/or an optionally protruding element to be protected to provide an optimum fixing of the protective pad.

In other embodiments of the present invention, the protective pad may comprise at least one incision, which may be made lengthwise. This incision(s) may allow to further increase the flexibility of the protective pad, so that at least one part of the protective pad created and/or defined by at least one incision may very easily bend and/or wrap around and/or over the edge and/or the optionally protective element to be protected.

The incision(s) may however be stopped at a certain depth, so that parts of the protective pad created and/or defined by at least one incision remain linked one to another.

The incisions may therefore preferably for example have a depth comprised between 20% and 95%, preferably 30% and 90%, further preferred between 40% and 80%, further preferred between 50% and 80% and even more preferred between 60% and 75% of the thickness of the protective pad. Increasing the depth of the incision may increase the flexibility of the protective pad and especially of the adhesive portion of the protective pad, so that the fixing may be better especially when the surface bordering an edge and/or an optionally protruding element is curved, but on the other hand it may decrease the mechanical resistance of the protective pad, as deep incisions may reduce the strength of the linking between the parts of the protective pad created and/or defined by at least one incision.

In preferred embodiments of the invention, the incision(s) may for example preferably form an angle of between 1° and 89, preferably between 25° and 80°, further preferred between 30° and 70°, even more preferred between 40° and 60° with the adhesive portion and/or a tangent thereto. Doing so may allow the protective pad to protect an edge and/or an optionally protruding element bordering one of the ends of the protective pad, by bending at least one part of the protective pad created and/or defined by at least one incision upon contact with an obstacle, so that at least one part of the protective pad created and/or defined by at least one incision bends and/or wraps over and/or around an edge and/or an optionally protruding element to be protected.

Moreover using incisions, which form a certain angle with the adhesive portion and/or a tangent thereto, may also prevent external elements, from penetrating in the incisions, as they may only penetrate in the incision with the right penetration angle, so that the probability of an accidental penetration is reduced. This helps reducing the risk that external elements may loosen the protective pad and/or damage the surface and/or the edge and/or the optionally protruding element to be protected once they have penetrated, in the incision.

The spacing between two incisions may be selected so that it allows an efficient protection, a good flexibility of the protective pad and that the fixing of the protective pad remains maintained in all conditions.

Moreover, the spacing between two incisions may vary along at least one direction, which may be parallel to the adhesive portion of the protective pad.

However, the spacing between two incisions may for example be selected between 1 mm and 150 mm, preferably between 1 mm and 100 mm, further preferred between 2 mm and 50 mm, further preferred between 2 mm and 30 mm, further preferred between 2 mm and 20 mm, even more preferred between 2 mm and 10 mm.

By decreasing the spacing between the incisions, one may increase the efficiency of the protection, because more parts of the protective pad created and/or defined by at least one incision bend and/or wrap over and/or around an edge and/or an optionally protruding element to be protected, so that they may wrap better and/or closer over and/or around an edge and/or an optionally protruding element to be protected because each part of the protective pad created and/or defined by at least one incision is thinner and thus more flexible.

In addition, decreasing the spacing between the incisions may increase the flexibility of the protective pad and especially of the adhesive portion of the protective pad, so that it may be better adapted and/or fixed to any kind of surface, specially any kind of curved surface, bordering an edge and/or an optionally protruding element to be protected.

Moreover, decreasing the spacing between the incisions and/or the thickness of the protective pad and/or the depth of the incisions and/or increasing the flexibility of the material used for producing the protective pad may decrease leverage working on the adhesive portion upon bending at least one part of the protective pad created and/or defined by at least one incision upon contact/collision with an obstacle, so that at least one part of the protective pad created and/or defined by at least one incision bends and/or wraps over and/or around an edge and/or an optionally protruding element to be protected. This may help to keep the protective pad fixed to the surface bordering an edge and/or an optionally protruding element to be protected in all conditions.

However a force, acting on at least one part of the protective pad created and/or defined by at least one incision pressing the protective pad and specially the adhesive portion against the surface it is fixed to may appear as a response to leverage, so that this force may also help to keep the protective pad fixed to the surface bordering an edge and/or an optionally protruding element to be protected in all conditions.

In preferred embodiments of the present invention, the protective pad may comprise at least one foamed material. The foamed material may be an open cell foam, a closed cell foam or a foam having partially open cells. However, this helps to get an efficient protection, as the choc/impact/bump absorbing properties of this kind of materials are good. Beside this, they have a low density, which helps keeping the production costs down and the weight of the protective pad low even when a large and/or long and/or thick protective pad may be required. Keeping the weight of the protective pad low helps getting an easy and firm fixing of the protective pad, as it is easier to fix a light protective pad.

In some embodiments of the present invention, the protective pad may comprise at least one polymeric material. This polymeric material may preferably be a resilient material. This helps to get an efficient protection, as the choc/impact/bump absorbing properties of this kind of materials are good.

In preferred embodiments of the present invention, the protective pad may comprise for example at least one preferably foamed polymeric material, like for example polyurethane, polyolefins, polystyrene, polyvinylchloride, copolymers and mixtures thereof.

In preferred embodiments of the present invention, the protective pad may comprise at least two different materials, which may preferably differ for example by their flexibility and/or compressibility. A very flexible/compressible material could be used improve the adaptability of the protective pad and especially of it's adhesive portion to the surface bordering an edge and/or an optionally protruding element especially when it is curved, so that the fixing may be better especially when the surface bordering an edge and/or an optionally protruding element is curved. A less flexible/compressible material may be used in combination with this very flexible material to provide de required mechanical strength and/or the required resistance to compression to protect at least one edge, at least a part of a surface bordering this edge and at least one optionally protruding element. The very flexible material may for example be an open cell foam and the less flexible material may for example be a closed cell foam.

In some embodiments of the present the protective pad may follow an edge and/or an optionally protruding element nearly along it's whole length to get an optimum protection, whereas in other embodiments of the present invention the protective pad may follow an edge and/or an optionally protruding element only along a part of it's length, to keep the material costs down.

The protective pad may therefore for example preferably have a length comprised between 1500 mm and 50 mm, preferably between 1000 mm and 50 mm, further preferred between 500 mm and 50 mm, further preferred between 250 mm and 50 mm, further preferred between 150 mm and 50 mm, even more preferred between 100 mm and 50 mm.

Moreover, the protective pad may therefore for example preferably have a width comprised between 1500 mm and 10 mm, preferably between 1000 mm and 10 mm, further preferred between 500 mm and 10 mm, further preferred between 250 mm and 10 mm, further preferred between 150 mm and 10 mm, further preferred between 100 mm and 10 mm, further preferred between 75 mm and 15 mm, further preferred between 60 mm and 20 mm and even more preferred between 50 mm and 25 mm.

In some embodiments of the present invention, the protective pad may have an important thickness to get an optimum protection in all conditions, whereas in other embodiments of the present invention the protective pad may have a lower thickness, to keep the material costs down.

The protective pad may therefore for example preferably have a thickness comprised between 150 mm and 5 mm, preferably between 100 mm and 5 mm, further preferred between 50 mm and 5 mm, further preferred between 40 mm and 10 mm and even more preferred between 35 mm and 10 mm.

In some embodiments of the present invention the thickness of the protective pad may be selected, so that an edge and/or an optionally protruding element may be covered by the protective pad, preferably by at least one part of the protective pad created and/or defined by at least one incision bending and/or wrapping over and/or around an edge and/or an optionally protruding element to be protected upon contact/collision with an obstacle. The thickness of the protective pad may therefore be selected for example depending on the distance between the adhesive portion of the protective pad and an edge to be protected and/or on the width of an optionally protruding element like a side bar and/or on the angle of a slate.

The invention finally also concerns the use of a protective pad according to the present invention to protect the door of a vehicle, especially the edge and/or the optionally protruding side bar of the door a vehicles door.

### Description of the figures:

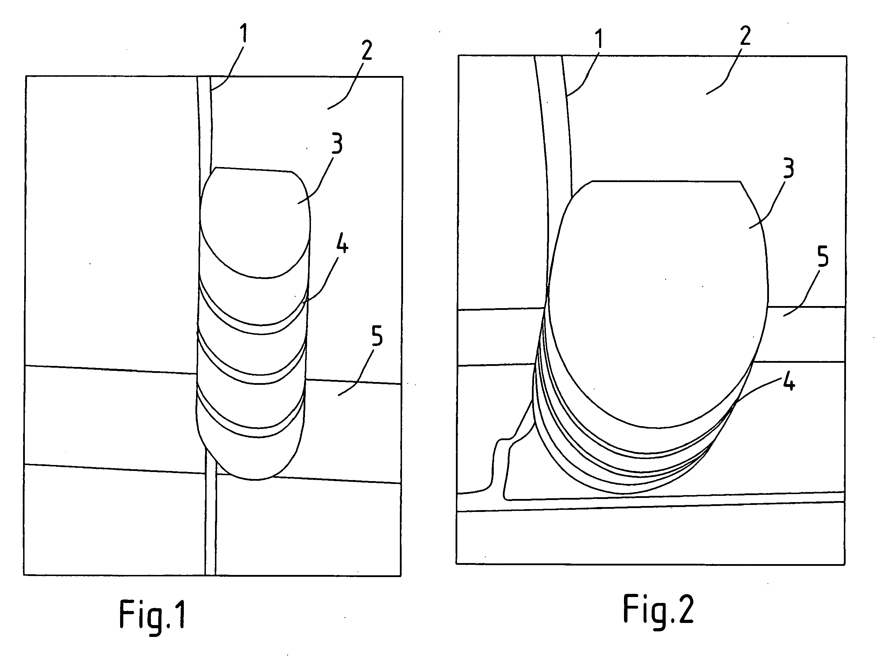

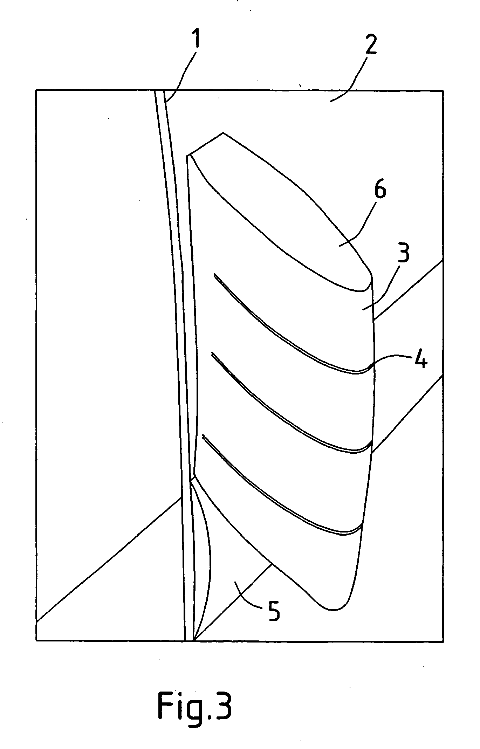

The figures 1 to 3 show a schematic representation of a protective pad (3) according to the present invention with an at least partially circular cross section, having a straight portion, resulting from cutting of a part of the circle with a straight cut, furthermore comprising three incisions (4) and two slants(6) placed and fixed on a vehicles door (2) comprising a protruding side bar (5), to protect both the edge (1) of the door (2) and the protruding side bar (5), from different angles.

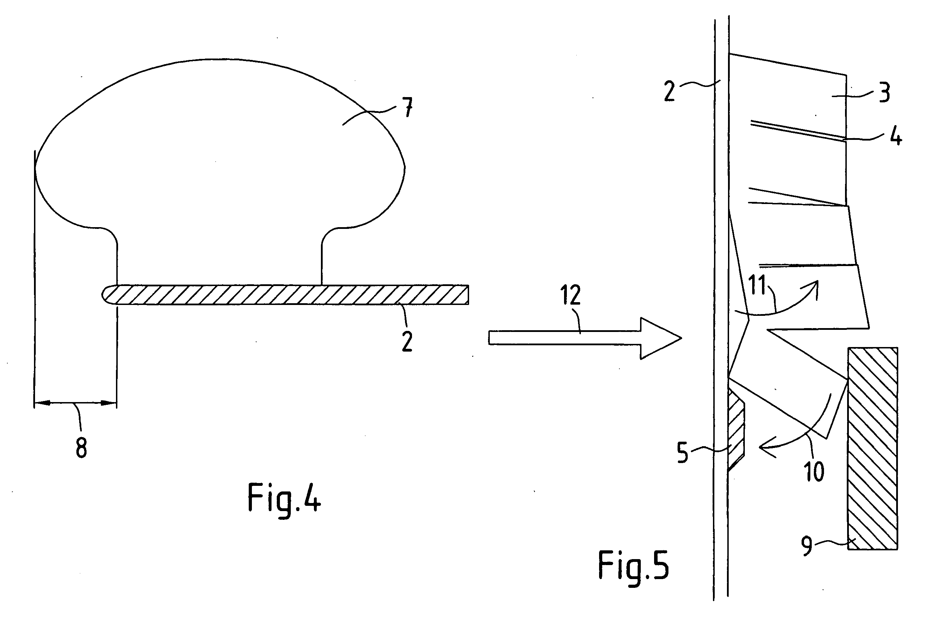

Fig. 4 shows a schematic representation of a protective pad according to the present invention with a cross section (7) with a mushroom-like form and/or with form like the cross section (7) of a mushroom placed next to an edge of a vehicles door (2) to be protected. A mushroom-like form and/or a form like the cross section (7) of a mushroom may be a preferred form of a cross section, in which a T-like or Y-like form may be inscribed. Beside allowing to get a protective pad, which extends beyond an adhesive portion, which may preferably located at the base of the T-like or Y-like form, in at least two directions, which are parallel to the adhesive portion and preferably to the base of the T-like or Y-like form, this kind of cross section (7) also allows to use an continuous extrusion process for the production of the protective pad, when materials, which undergo some swelling while and/or after extrusion are used. However, there is a difference (8) between the maximal width of the protective pad and the maximal width of the adhesive portion of the protective pad that fixes the protective pad to the door (2).
Fig. 5 shows a schematic representation of how a protective pad (3) comprising four incisions (4) protects a protruding element like the protruding side bar (5) by bending of at least one part of the protective pad (3) created and/or defined by at least one incision (4) upon contact with an obstacle (9), when the door is opened by a movement along the direction (12), so that at least one part of the protective pad (3) created and/or defined by at least one incision bends and/or wraps over and/or around an edge and/or an optionally protruding element, like the protruding side bar (5), to be protected. Beside of that, Fig. 5 does also show how leverage (10) due to bending at least one part of the protective pad (3) created and/or defined by at least one incision (4) upon contact with an obstacle (9), so that at least one part of the protective pad (3) created and/or defined by at least one incision (4) bends and/or wraps over and/or around the edge and/or the optionally protruding element, like the protruding side bar (5), to be protected may lift the adhesive portion of the protective pad (3) from the surface on which it is fixed, while reducing the efficiency of the fixing. Finally, Fig. 5 does also show that a force (11), acting on at least one part of the protective pad (3) created and/or defined by at least one incision (4) pressing the protective pad (3) and specially the adhesive portion against the surface it is fixed to may appear as a response to leverage (10), so that this force (11) may also help to keep the protective pad (3) fixed to the surface bordering the edge and/or the optionally protruding element, like the protruding side bar (5), to be protected in all conditions.

Numbering of the figures:
- (1): edge to be protected
- (2): surface of a vehicles door
- (3): protective pad
- (4): incision
- (5): protruding side bar
- (6): slant of the protective pad
- (7): cross section of the protective pad
- (8): difference between the maximal width of the protective pad and the maximal width of the adhesive portion of the protective pad
- (9): obstacle
- (10): leverage
- (11): force responding to leverage

## Claims

1. Protective pad (3) for protecting a vehicles door (2), which comprises exactly one adhesive portion and extends beyond this portion at least in two directions, which are parallel to the adhesive portion, **characterised in that** the at least two directions parallel to the adhesive portion, in which the protective pad (3) extends beyond the adhesive portion, are not opposed one to another.

2. Protective pad (3) according to claim 1,
**characterised in that,**
it extends beyond the adhesive portion at least in three directions, which are parallel to the adhesive portion.

3. Protective pad (3) according to on one or both of the claims 1 and 2,
**characterised in that,**
at least two directions parallel to the adhesive portion, in which the protective pad (3) extends beyond the adhesive portion, are perpendicular one to another.

4. Protective pad (3) according to one or more then one of the claims 1 to 3,
**characterised in that,**
the thickness varies along a direction, which is parallel to the adhesive portion.

5. Protective pad (3) according to one or more then one of the claim 1 to 4,
**characterised in that,**
the protective pad comprises a cross section (7) with a T-like or Y-like form or cross section, in which a T-like or Y-like form may be inscribed.

6. Protective pad (3) according to one or more then one of the claims 1 to 5,
**characterised in that,**
the cross section (7) of the protective pad (3) is at least partially circular, with a straight portion, resulting from cutting of a part of the circle with a straight cut or at least partially in the form of a compressed circle, with a straight portion, resulting from cutting of a part of the circle with a straight cut and compressing the resulting partially circular form against the resulting straight portion by reducing the height of the cross section (7).

7. Protective pad (3) according to one or more then one of the claims 1 to 6,
**characterised in that,**
it is slanted (6) widthwise at least ad one end.

8. Protective pad (3) according to one or more then one of the claims 1 to 7,
**characterised in that,**
it comprises at least one incision (4), which is made widthwise.

9. Protective pad (3) according to one or more then one of the claims 1 to 8,
**characterised in that,**
that the incisions (4) form an angle between 1° and 89° with the adhesive portion.

10. Protective pad (3) according to one or more then one of the claims 1 to 9,
**characterised in that,**
that the spacing between two incisions (4) is comprised between 1 mm and 150 mm

11. Protective pad (3) according to one or more then one of the claims 1 to 10,
**characterised in that,**
it comprises at least one foamed material.

12. Protective pad according to one or more then one of the claims 1 to 11,
**characterised in that,**
it comprises at least one polymeric material.

13. Use of a protective pad (3),
**characterised in that,**
a protective pad (3) according to one or more then one of the claims 1 to 12 is used to protect the door of a vehicle (2).

## Patentansprüche

1. Schutzpolster (3) zum Schützen einer Fahrzeugtür (2), das genau einen Haftabschnitt umfasst und mindestens in zwei Richtungen, die parallel zu dem Haftabschnitt sind, über diesen Abschnitt hinaus verläuft,
**dadurch gekennzeichnet, dass**
die mindestens zwei Richtungen parallel zu dem Haftabschnitt, in denen das Schutzpolster (3) über den Haftabschnitt hinaus verläuft, einander nicht gegenüberliegen.

2. Schutzpolster (3) nach Anspruch 1,
**dadurch gekennzeichnet, dass**
es in mindestens drei Richtungen, die parallel zu dem Haftabschnitt sind, über den Haftabschnitt hinaus verläuft.

3. Schutzpolster (3) nach einem oder beiden der Ansprüche 1 und 2,
**dadurch gekennzeichnet, dass**
mindestens zwei Richtungen parallel zu dem Haftabschnitt, in denen das Schutzpolster (3) über den Haftabschnitt hinaus verläuft, senkrecht zueinander sind.

4. Schutzpolster (3) nach einem oder mehr als einem der Ansprüche 1 bis 3,
**dadurch gekennzeichnet, dass**
die Dicke entlang einer Richtung, die parallel zu dem Haftabschnitt ist, variiert.

5. Schutzpolster (3) nach einem oder mehr als einem der Ansprüche 1 bis 4,
**dadurch gekennzeichnet, dass**
das Schutzpolster einen Querschnitt (7) mit einer T-artigen oder Y-artigen Form oder einen Querschnitt, in den eine T-artige oder Y-artige Form einbeschrieben werden kann, umfasst.

6. Schutzpolster (3) nach einem oder mehr als einem der Ansprüche 1 bis 5,
**dadurch gekennzeichnet, dass**
der Querschnitt (7) des Schutzpolsters (3) mindestens teilweise kreisförmig mit einem geraden Abschnitt, der sich aus dem Abschneiden eines Teils des Kreises mit einem geraden Schnitt ergibt, oder mindestens teilweise in Form eines zusammengedrückten Kreises mit einem geraden Abschnitt, der sich aus dem Abschneiden eines Teils des Kreises mit einem geraden Schnitt und dem Zusammenrücken der sich daraus ergebenden teilweisen Kreisform gegen den sich daraus ergebenden geraden Abschnitt durch Verringern der Höhe des Querschnitts (7) ergibt, ist.

7. Schutzpolster (3) nach einem oder mehr als einem der Ansprüche 1 bis 6,
**dadurch gekennzeichnet, dass**
es in Breitenrichtung mindestens an einem Ende geneigt (6) ist.

8. Schutzpolster (3) nach einem oder mehr als einem der Ansprüche 1bis 7,
**dadurch gekennzeichnet, dass**
es mindestens einen Einschnitt (4), der in Breitenrichtung hergestellt ist, umfasst.

9. Schutzpolster (3) nach einem oder mehr als einem der Ansprüche 1bis B,
**dadurch gekennzeichnet, dass**
die Einschnitte (4) mit dem Haftabschnitt einen Winkel zwischen 1° und 89° bilden.

10. Schutzpolster (3) nach einem oder mehr als einem der Ansprüche 1bis 9,
**dadurch gekennzeichnet, dass**
der Abstand zwischen zwei Einschnitten (4) zwischen 1mm und 150 mm umfasst.

11. Schutzpolster (3) nach einem oder mehr als einem der Ansprüche 1 bis 10,
**dadurch gekenntzeichnet, dass**
es mindestens einen Schaumstoff umfasst.

12. Schutzpolster nach einem oder mehr als einem der Ansprüche 1bis 11,
**dadurch gekennzeichnet, dass**
es mindestens ein Polymermaterial umfasst.

13. Verwendung eines Schutzpolsters (3),
**dadurch gekennzeichnet, dass**
ein Schutzpolster (3) nach einem oder mehr als einem der Ansprüche 1bis 12 zum Schützen einer Tür eines Fahrzeugs (2) verwendet wird.

## Revendications

1. Coussin protecteur (3) pour protéger une portière de véhicule (2) qui comprend exactement une portion adhésive et s'étend au-delà de cette portion au moins dans deux directions qui sont parallèles à la portion adhésive,
**caractérisé en ce que**
les au moins deux directions parallèles à la portion adhésive dans lesquelles le coussin protecteur (3) s'étend au-delà de la portion adhésive ne sont pas opposées l'une à l'autre.

2. Coussin protecteur (3) selon la revendication 1,
**caractérisé en ce que**
il s'étend au-delà de la portion adhésive au moins dans trois directions qui sont parallèles à la portion adhésive.

3. Coussin protecteur (3) selon une des revendications 1 et 2 ou les deux,
**caractérisé en ce que**
au moins deux directions parallèles à la portion adhésive dans lesquelles le coussin protecteur (3) s'étend au-delà de la portion adhésive sont perpendiculaires l'une à l'autre.

4. Coussin protecteur (3) selon une ou plus d'une des revendications 1 à 3,
**caractérise en ce que**
l'épaisseur varie le long d'une direction qui est parallèle à la portion adhésive.

5. Coussin protecteur (3) selon une ou plus d'une des revendications 1 à 4,
**caractérisé en ce que**
le coussin protecteur comprend une section transversale (7) avec une forme de type T ou de type Y ou une section transversale dans laquelle une forme de type T ou de type Y peut être inscrite.

6. Coussin protecteur (3) selon une ou plus d'une des revendications 1 à 5,
**caractérisé en ce que**
la section transversale (7) du coussin protecteur (3) est au moins partiellement circulaire avec une portion droite résultant du découpage d'une partie du cercle avec une coupe droite, ou au moins partiellement sous la forme d'un cercle comprimé avec une portion droite résultant du découpage d'une partie du cercle avec une coupe droite et de la compression de la forme partiellement circulaire résultante contre la portion droite résultante en réduisant la hauteur de la section transversale (7).

7. Coussin protecteur (3) selon une ou plus d'une des revendications 1à 6,
**caractérisé en ce que**
il est incliné (6) en largeur au moins à une extrémité.

8. Coussin protecteur (3) selon une ou plus d'une des revendications 1 à 7,
**caractérisé en ce que**
il comprend au moins une incision (4) qui est réalisée en largeur.

9. Coussin protecteur (3) selon une ou plus d'une des revendications 1 à 8,
**caractérisé en ce que**
les incisions (4) forment un angle entre 1° et 89° avec la portion adhésive.

10. Coussin protecteur (3) selon une ou plus d'une des revendications 1 à 9,
**caractérisé en ce que**
l'espacement entre deux incisions (4) est compris entre 1 mm et 150 mm.

11. Coussin protecteur (3) selon une ou plus d'une des revendications 1 à 10,
**caractérisé en ce que**
il comprend au moins un matériau moussé.

12. Coussin protecteur selon une ou plus d'une des revendications 1 à 11,
**caractérisé en ce que**
il comprend au moins un matériau polymère.

13. Utilisation d'un coussin protecteur (3),
**caractérisée en ce que**
un coussin protecteur (3) selon une ou plus d'une des revendications 1 à 12 est utilisé pour protéger la portière d'un véhicule (2).
